Europäisches Patentamt

(19) European Patent Office

Office européen des brevets

(11) Publication number: **0 082 231**
**B1**

(12) **EUROPEAN PATENT SPECIFICATION**

(45) Date of publication of patent specification: **26.03.86**

(51) Int. Cl.⁴: **C 03 B 37/00, C 03 B 19/00, G 02 B 6/00**

(21) Application number: **81810507.4**

(22) Date of filing: **21.12.81**

(54) Method for manufacturing glass preforms to be used in the melt drawing of optical fibers.

(43) Date of publication of application:
**29.06.83 Bulletin 83/26**

(45) Publication of the grant of the patent:
**26.03.86 Bulletin 86/13**

(84) Designated Contracting States:
**CH DE FR GB LI**

(56) References cited:
**DE-A-2 545 278**
**GB-A-1 552 518**
**GB-A-2 041 913**

**PATENT ABSTRACTS OF JAPAN, unexamined applications, C field, vol. 5, no. 160, October 15, 1981 THE PATENT OFFICE JAPANESE GOVERNMENT, page 155 C 75**

(73) Proprietor: **BATTELLE MEMORIAL INSTITUTE**
**7 route de Drize**
**CH-1227 Carouge/Genève (CH)**

(72) Inventor: **Harmer, Alan Lewis**
**74, chemin de la Mère-Voie**
**CH-1228 Plan Les Quates Genève (CH)**
Inventor: **Puyane, Ramon**
**26, route de Chancy**
**CH-1213 Petit Lancy Genève (CH)**
Inventor: **Gonzalez Oliver, Carlos**
**5, rue du Pré-Jérôme**
**CH-1205 Genève (CH)**

(74) Representative: **Dousse, Blasco et al**
**7, route de Drize**
**CH-1227 Carouge/Genève (CH)**

Courier Press, Leamington Spa, England.

## Description

The present invention concerns fiber optics for telecommunications and, more particularly, a method for manufacturing an elongated glass preform suitable for the melt drawing of optical fibers.

As is well known, optical fibers in general consist of a glass or doped silica core surrounded by a cladding made of a lower refractive index medium for ensuring total reflection transmission of the light pulses travelling through the core. Such cladding can have a stepped refractive index relative to the core or, otherwise, the refractive index change from the core to the cladding can follow a gradient profile, this being to the extent that no distinct boundary further exists between the so called core and cladding. A profile of such kind having a parabolic shape is often desirable as it decreases the pulse dispersion in multimode fibers.

Many methods have been proposed in the art to provide fibers with gradient index profiles among which one of the most favored methods consist in subjecting an elongated preform or mother-rod to melt drawing, said preform consisting of an elongated piece of glass or silica of diameter for instance, 1 to several cm, i.e. many times that of the fiber to be drawn therefrom and composed of layers of glasses with indices of refraction slightly varying from one to the next, thus roughly providing the same general pattern corresponding to the desired graded index profile to be given to the fiber. Thus, under melt drawing conditions, both the core and the cladding layers will fuse together, the general optical geometry of the mother-rod being thus preserved in the fiber although with a much reduced diameter (a few tens of microns) and no further radial refractive index step transition being then observable in the glass.

The preforms suitable for the melt-drawing of graded index fibers as mentioned above can be obtained by many methods including the progressive deposition (on the outside of a rod or the inside wall of a tube) of successive layers of glasses or glass precursor materials with compositions that vary from one layer to the next one according to a desired pattern, such pattern being defined for providing ultimately in the ensemble (after final glassification if required) the desired gradient index profile. It should be clear to the reader that the terms "glasses" or "glassy material" used here rather refer to the generic meaning of these terms, i.e. to the vitrified state of such materials (as opposed to the crystallized state). Thus, in the present disclosure a glass will include pure silica as well as metal oxides or mixtures thereof in the glassy state whatever the method used for their preparation.

For applying successive layers of glasses or glass precursors on a substrate e.g. a preform web (a rod or the inside of a tube) several methods are commonly being used including the chemical vapor deposition (CVD) of reagents the reaction of which will provide the required metal oxides on the surface of said substrate, flame or plasma spraying of metal oxides, vapor phase hydrolysis and other related methods. For instance, in FR—A—2 429 040 and 2 473 497, there is disclosed a method according to which a rotating pure silica preform web (i.e. a rod or a tube) is sprayed with a solution of one or several oxides, the solvent is evaporated and the oxide layer thus formed is sintered to a glass by heat, the sequence of operations being repeated as many times as needed with successively varying solutions compositions for giving the desired ensemble of layers with the desired gradient index pattern. For varying the solutions in the successive layers, the base silica solution is doped with progressively varying amounts of dopants such as $P_2O_5$, $B_2O_3$ and compounds of germanium, titanium, aluminium, arsenic, niobium, antimony and others.

In this method which has unquestionable merits, the spraying of the silica or other metal oxides and densification by heat of the layer thus obtained are performed practically simultaneously, i.e. the spraying means and the heating means are so arranged that densification heat is applied to the coated area practically as soon as that area has been coated with the metal oxide solution. This is a seemingly very attractive approach but it is not economical as part of the metal oxides will not adhere to the substrate and be driven off with the exhaust gases. Also it is not readily applicable when using metal alkoxide solutions as in the present invention. Indeed, the present inventors have found that when subjecting a freshly deposited metal alkoxide layer to high temperature (i.e. to simple evaporation) without first allowing it to cure hydrolytically, only defective sintered glass layers are obtained. Hence, in the present invention, after one layer of the alkoxide solution has been applied, this is first hydrolytically cured to a polysiloxane backbone and then heat densified to a temperature of preferably 200—600°C, although these limits can be exceeded in some cases, before applying the next layer. This method provides a much more regular distributed multilayer composite than the methods of the prior art.

Another document, DE—A1—2 545 273 discloses a method of manufacturing a glass fiber preform, consisting in wetting a webb with a hydrolysable alcoholic solution of a metal-ester, evaporating and heating the coating obtained to convert it to a glass layer. The web can be a cylindrical rod or a tube. The solution can comprise doping compounds to achieve glass layers with defined refractive indices and refractive index profiles.

Briefly, the method of the invention as defined in claim 1 comprises coating the side or lateral surrounding surface of a generally cylindrically shaped web of circular or elliptical cross-section, i.e. that of a rod or of the inside and/or the outside of a tube, by a plurality of layers of solution of metal alkoxides, each layer being hydrolytically cured to a stiff gel under controlled conditions whereby evaporation of the solvents is limited by providing a temperature and humidity controlled atmosphere at 5—100°C and 10—80% relative humidity and then heat densified before applying the subsequent layer, until a cylindrically laminated composite is obtained, then either removing the web or not removing it, (this step being optional when the web is made of glass or of a glass precursor material), and finally drying, heat sintering and optionally collapsing said composite to a glass preform, the composition of the metal alkoxides solutions corresponding to each successive layer of the coating being suitably varied from one to the next layer to cause the refractive index of the glass in said preform to radially vary according to a predetermined pattern. Such pattern can correspond to any desired gradient index profile in the mother-form (and in the melt-spun fiber derived from said mother-form) including desirable parabolic shaped profiles.

In the method summarized above, it has been stated that in some cases the web can be removed from the composite and in other cases the web is not removed. Obviously, if the web is made of a material different from glass or a glass precursor then the web will be removed at some stage, otherwise it would remain as an undesirable foreign body in the desired preform. If the web is made of glass, or silica or any glass precursor material then its removal becomes optional and said removal is either desirable or not desirable but not harmful as a foreign body in the ultimate preform since under final heat treatment the web will get fused with the coating. Obviously also, when the web is a removable rod, the composite will be a tube and when the web is a removable tube the inside of which has been coated, the composite will be a rod. However, in both cases the end product will serve the same purpose as, under the final high temperature treatment to be described hereinafter, the tube may be collapsed to a rod if temperatures are high enough to cause the glass to soften. However, it is not even necessary to have such a tube be converted into a rod for the making of fibers as the direct melt drawing of the tube according to the present invention will also provide a desirable optical fiber, the collapsing and vanishing of the central void of said tube occurring simultaneously with the drawing thereof to a fiber. Thus, in the present invention, the achieved optical preforms include tube-like as well as rod-like preforms.

When performing the method of the invention with removable webs, the material for the latter can be any, provided it is stable toward metal alkoxide solutions and provided it can be removed from the hydrolytically gelled composite without difficulty either by pulling off if the affinity of the web and the coating is not significant or by other means. Thus, metal or organic webs can be contemplated such as platinum, silver, zinc, copper, steel and the like for the metals and resins for the organics, preferably teflon which can be removed by pulling or thermofusible or soluble resins such as acrylic, polyester and polyolefin resins. Indeed, when the web is of metal, and cannot be simply removed mechanically, it is dissolved in a suitable aqueous acid such as HCl, $HNO_3$, $H_2SO_4$ or the like and when the web is of an organic resin and either sticks to the gel, it is melted away by heat or dissolved in a solvent like acetone, DMF, chloroform, methylene chloride, methyl cellosolve or the like. Or, in some cases the web (if made of an insoluble combustible material for instance) can even be removed by burning whereby the separate step normally provided for removing the web before final heat sintering can be omitted, said removal occurring simultaneously with said sintering by reason of the relatively high temperature involved. However, in many cases the web can be removed from the composite by simply heating to a temperature where physical separation occurs due to the heat expansion coefficients being different in the web and the deposited lamina.

When performing the present method with non-removable webs, the material for the latter becomes part of the desired preforms. Thus glasses with suitable refraction indices will be selected. Of course, if the web is a rod, it will form the core of the preform; therefore a material with a relatively high refractive index will be selected. If the web is a tube, it will form the outside of the cladding of the preform, therefore, a material with a relatively low refractive index will be selected. As examples of such high and low refractivity glasses, it can be mentioned that the addition of $P_2O_5$, $TiO_2$, $GeO_2$ and other metal oxides will raise the refractive index of high silica content glasses. To lower the refractive index of high silica glasses, $B_2O_3$ can advantageously be added. Further, multicomponent glasses (such as for instance $Na_2O$—$Al_2O_3$—$SiO_2$ glasses) are also useful in the present invention.

A material which is particularly favored for the non-removable types webs in the present invention is the stiff hydrolytically cured gel which is obtained from the same metal alkoxide solutions used for providing the layers around said web. Thus, such webs can be obtained from doped or undoped alkyl silicate and/or alkoxide solutions by techniques similar to that to be described hereinbelow in connection with the detailed description of the invention and need not be further discussed. Suffice to say here that when metal alkoxide gelled substrates are used as the present webs, the full composite (web plus laminated ensemble of gelled layers) will be subjected to the final heat treatment in bulk, drying and heat-sintering occurring simultaneously in the core and in the cladding.

The metal alkoxide solutions usable in the invention for making the successive layers (and also the web on some occasion as recited above) are extremely varied in kinds and fundamentally depend on the availability in the form of alkoxides or similar compounds of the metals normally present as oxides in glasses. Alkoxides here mean lower alkoxides, e.g. methoxy, ethoxy, propoxy, isopropoxy, butoxy and the like although other alkoxides can be contemplated in case of availability.

Briefly, the preferred alkoxides are those soluble in, mainly, alcohols so as to be able to provide solutions having total alkoxide concentration ranging from about 5% to 70%. For Si, Ge, P and Ti alkoxides, it is convenient to use the corresponding ethoxides; for K, Na and Li the methoxides, for Al and Zr the isopropoxide and butoxide, respectively, and for other elements like Y, B, Ba, Ca, etc, any lower soluble alkoxides. Special chelated compounds can be occasionally used i.e. those chelated Ti compounds based on Ti-isopropoxide.

In general, the basic ingredient of the solutions used in the present invention is tetraethoxy silane to which variable amounts of dopant metal alkoxides are added according to a predetermined concentration that varies from one layer to the next one. This predetermined variation follows the same general pattern as that pertaining to the graded index profile of the preform which will ultimately result after the application of the plurality of layers of metal alkoxides is completed. For instance in the case of using a solution containing basically silicon ethoxide and germanium ethoxide, a variation by weight of the germanium dopant can be 1 to 3% approximately with reference to the composition of the previous layer solution. In addition to the metal alkoxides, the present solutions may also contain other metal compounds such as oxalates, acetylacetonates, chlorides, nitrates, carbonates and the like.

The solvents which are preferred in the present solutions are water compatible solvents and are for instance ethanol, methanol, butanol, glycols, acetone, tetrahydrofurane, dioxane and the like. Water penetration into the solution and compatibility therewith is important with regard to the hydrolytic gelation cure that occurs in each successive layer of solution. Thus, the solution must be permeable to the humidity from the atmosphere to which the web is subjected for building the successive layers of gelled alkoxides and the above solvents are convenient in this regard. Generally the range of concentrations of the metal alkoxides in the above solvents is from about 5% to 70% by weight for the tetraethoxy silane. For the dopants, the concentration is adjusted such that, in the final sintered glass, the dopant percent will range from about 0.5 to 50%. It may be sometimes advantageous to directly add a proportion of water to the alkoxide solution to induce in situ hydrolysis and polycondensation in the liquid state that will increase its viscosity and its adhesion on the web. The quantity of water, expressed as the ratio of moles of $H_2O$ per moles of alkoxides present can range from about 0.1 to 20.

The mechanism according to which gelation is taking place in the alkoxide solutions is probably linked with the progressive hydrolysis of the alkoxide groups and self polymerization of the ME—OH functions (ME being the symbol for metals). However, the extract definition of this mechanism is immaterial for the working of the present invention and needs not being further developed here.

Catalysts have been found to speed up the gelation process. Such catalysts can be for instance $NH_4OH$, HCl, alkylpolymethacrylate, etc..., the concentration of which may range from about $10^{-4}$ to 1% by volume in the alkoxide solution.

In practice, the method of the present invention can be carried out as follows: A web is first selected which can be a rod or a tube of glass or other material as described before or of dried metal alkoxide gel and this web is contacted with the metal alkoxide solution so its surrounding surface gets coated with said alkoxide solution. Said coating can be performed by usual means, i.e. by spraying or painting the solution on the substrate or immersing the latter in the solution and withdrawing slowly to ensure the formation of a thin film of the solution on the surface of the web. Usually, the web is allowed to drain until a film of substantially even thickness (about 0.1—5 microns) is obtained. One particular embodiment of such technique applied to the inside coating of tubes is described hereinafter in the Examples. Then the substrate thus coated is allowed to rest for a period of a few minutes to several days in a usually flowing atmosphere of about 10 to 80% humidity at a temperature from about 5 to 100°C to ensure moisture penetration into the solution layer and gelation. The temperature range given here is not particularly critical however, below 5°C the reaction becoms too slow to be practical and, above 100°C, the rate of evaporation of the solvents that may occur simultaneously with gelation may become too high, thus increasing the solution viscosity and concentration, whereby thicker films are formed and crack formation may occur in the gelled layer. Then, after the gel has formed, the substrate is further heated for a few minutes to several hours at higher temperatures, i.e. from about 100 to 600°C to drive off the solvents still trapped in the gel to complete the condensation reactions and, if desired, to densify to almost full density. If desired, the complete sintering of the densified layer can also be undertaken at this stage, i.e. at temperature above 600°C, for instance of 1000°C or more. In some other cases, full densifying can be omitted, a gelling step of the alkoxide layer being enough for ensuring sufficient stiffness thereto before applying the next layer. Also, other drying techniques, besides simple heat, can be applied for removing the water trapped within the gelled layer, i.e. applying high vacuum (together with heat) or heating under a chlorine atmosphere. Anyway, the exact temperatures, heating times and reduced pressures will depend each time on the particular gel composition and will be easily determined as such by the skilled operator. At this stage, the substrate is ready to receive a new layer of coating with a new solution the composition of which is slightly different from the previous one according to the criteria already discussed and the above procedure is repeated. Then further layers are applied still by the same method until a required total of individual layers is obtained which can be about a dozen to more than a hundred. The thickness of each gel layer can be a fraction of a micron to several microns, the actual thickness being actually governed by the rheological properties of the solutions used and the rate of application.

Then, after the last layer has been applied, the web is removed (or not removed if it is designed to stay there) as already described and the whole composite is put in an oven and further dried at progressively raised temperatures, i.e. 400 to 1100°C, to achieve final sintering of the slightly porous layers into the desired assembly of fully condensed glass layers bonded to the substrate. The maximum sintering temperature will strongly depend on the overall glass transition temperature and will be adapted accordingly. The heating will be effected for the required time until the gel is converted to a true glass. This completes the preform which can then be subjected to melt-drawing into a fiber. Such melt drawing can be performed according to usual means and needs not be particularly discussed here.

Some practical examples will be now given by way of illustration for which the appended drawing may be helpful. In this drawing:

Fig. 1 is a schematic representation of a device for performing the coating and gelation steps in one embodiment of the manufacture of the present preform.

Figs. 2a, 2b and 2c illustrate schematically the steps of preparing a gelled alkoxide web suitable for being used in an embodiment of the method of the invention.

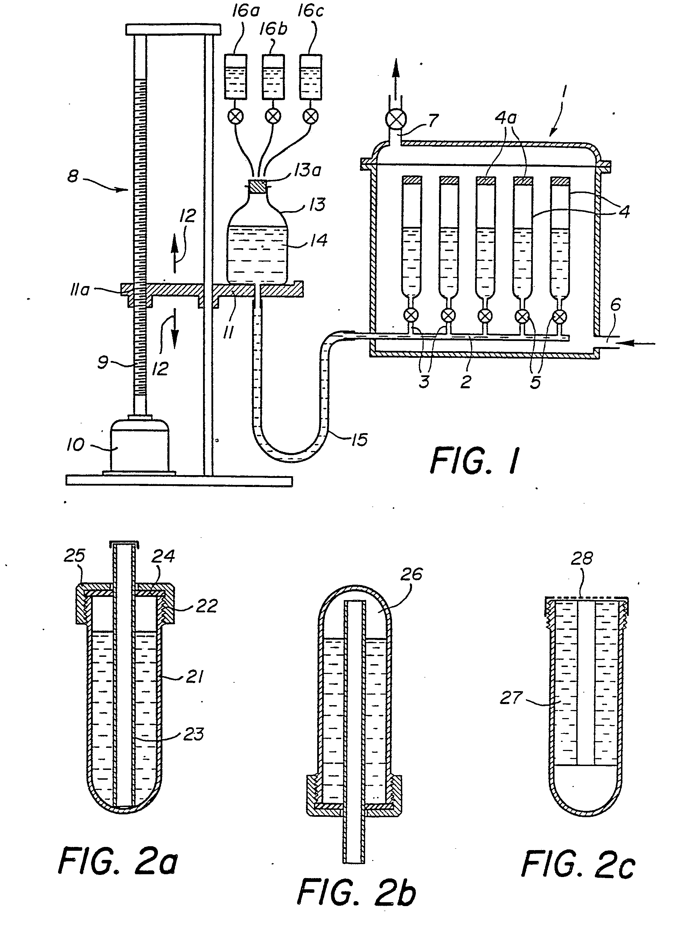

The device schematically represented on Fig. 1 comprises an oven type enclosure 1 provided with a horizontal feed tube 2 extending to the outside through the wall of the oven and carrying a plurality of side tubings 3 to which corresponding tubes 4 can be connected by usual means (tapered or flexible connectors and the like). The side tubes comprise the valves 5 for controllably enabling a liquid to enter into the tubes 4. The tubes 4 are actually the webs used in the manufacture of the preforms according to the invention. They can be made of any of the materials already disclosed hereinbefore. In a particular application they are made of very pure silica. The oven 1 is also provided with an inlet 6 for gases and a valve controlled exhaust duct 7. Each tube is protected on top with a removable porous plug 4a, e.g. a fritted glass disk.

The present device further comprises a stand 8 provided with a threaded rotatable drive-bar 9 powered by a motor 10 engaging in a threaded portion 11a of an upwardly and downwardly displaceable horizontal bracket 11 (see the arrows 12). Said bracket 11 is supporting a reservoir 13 of a solution 14 of alkoxide, which reservoir is connected to the feed tube 2 by a flexible hose 15.

The reservoir 13 is closed with a porous plug 13a. This hose 15 is made of a very pure flexible silicone resin to prevent contamination by possible impurities of the liquid 14. For the sake of simplicity the representation shown on Fig. 1 is oversimplified, only the essential features thereof being pictured. For instance, all retaining, reinforcing and fixing means for the tubes, the stand and the reservoir have been omitted as they do not particularly contribute to the comprehension of the invention.

The operation of the present device is described as follows: A series of web tubes 4 being tightly connected to the side arm tubes 3, the reservoir 13 is first lowered to a position below the level of feed tube 2 and in such position, it is filled with an alkoxide solution 14. Then, by rotating the screw bar 9 by means of the motor in the right direction (clockwise), the supporting bracket 11 and reservoir 13 is raised until the liquid flows into the tubes 4 through the hose 15, the feed tube 2 and the side tubes 3 under control from the valves 5. Thus, the liquid slowly raises in the tubes 4 and stops finally at the same level as of the liquid 14 in reservoir 13. This level can be controlled by stopping the motor 10 when the reservoir has reached a desired height.

Then, an atmosphere of suitable temperature and humidity is introduced into the oven 1 through inlet 6, the initial air being allowed to escape through the outlet 7. Then, still by acting on the motor rotating in the reverse direction, the reservoir 13 is lowered at a predetermined rate which causes the tubes 4 to progressively empty (the rate of emptying being also controlled by the valves 5) thus leaving a film of solution against the inside walls of the tubes 4. Simultaneously the humidity and temperature controlled atmosphere will enter the tubes 4 through the top porous plugs 4a and effect the hydrolytic gelation cure of the remaining film of alkoxide. After said cure is completed i.e. when the gel has sufficiently stiffened, warm air or gas is introduced in the enclosure 1 whereby further evaporation and drying of the gelled layer occurs. Then, such warm air or gas is again replaced by a regular atmosphere, the solution 14 is changed according to the criteria disclosed heretofore and the process is repeated as many times as the desired total number of gelled layers.

In this regard, it is to be noted that rather than emptying reservoir 13 and replacing each time with a fresh solution, a basic solution (e.g. tetraethyl silicate) can be continuously left in the reservoir, the required change in composition being provided by adding further quantities of dopants in said solution for the building of successive new layers. Such dopants can by timely added dropwise from supplies 16a, 16b and 16 for forming new layers, after removing the porous plug 13a.

When the inside of the tubes has been coated with the desired numbers of layers, the tubes are disconnected and removed from oven 1. Then the web may be separated from the semi-condensed preform if the nature of the tube and the conditions of coating permit and said preform is further heat treated and finally sintered and, optionally, collapsed to a bar under the conditions already outlined hereinbefore. Alternatively, when the web is made of glass or a glass precursor, e.g. a processed gel web as we shall see in the Examples, the whole composite consisting of the web plus the deposited lamina is subjected in bulk to heat treatments as said above.

It should be mentioned that for the treatment of rod-like webs a device comparable to that represented on Fig. 1 is used. In such device, not shown, the rod type webs are held over a batch of alkoxide solution in an atmosphere controlled oven by a clamping element adapted to move up and down exactly as with the bracket 11 of Fig. 1, thus enabling the rods to be dipped and withdrawn at controlled rate in said batch of alkoxide solution. After allowing the rods to fully drain until a layer solution of substantially even thickness is obtained, the batch is removed from the oven and the film of solution is allowed to gel. Then the full sequence of events is repeated and completed exactly as disclosed in the above case for the tubes. There is then no fundamental difference in the processing of tube-like or rod-like webs.

### Example 1

An alkoxide solution was prepared by mixing in an ultra-pure fused silica container the following ingredients (v/v %) according to the concentrations given in the next Table I: $Si(OEt)_4$, ethanol, methanol, ethyl acetoacetate (AcAc) and $Ge(OEt)_4$. Then a quantity of water or aqueous-ethanol HCl solution was added in such quantity that the mole ratio of water to ethoxy silane be at least 4.

TABLE I

| Sample | Coating Composition (v/v %) | | | | | |
| --- | --- | --- | --- | --- | --- | --- |
| | $Si(OEt)_4$ | $Ge(OEt)_4$ | EtOH | MeOH | AcAc | $H_2O$ |
| A | 27.5 | 1.55 | 44.2 | 7.4 | 0.08 | 19.4 (0.1 N HCl) |
| B | 21.4 | 5.3 | 48.1 | 4.5 | — | 20.8 |

Then, the apparatus as described above with reference to Fig. 1 was equipped with pure silica tubes of about 20 cm long and about 20 ml liquid capacity. The prepared solution (A) was put into reservoir 13 and the mixture was raised in the tubes by acting on motor 10 at the rate of 1 mm/min, then when the tube were filled nearly to the top, an 80% humidity and 60°C air was introduced into the enclosure 1 and the tubes were gradually emptied by gravity at the same rate of 1 mm/min. The tubes were left empty under the above humidity and temperature for about 1 hr after which the moist air was replaced by dry air at 150°C. This was left to dry the first gelled layer for about 10 min after which the first cycle was achieved. The thickness of the gelled layer was about 10 microns.

Then, the cycle was repeated with solutions of progressively increased dopant concentration. Such concentration was increased each time about 1—5% v/v over the previous concentration and the cycles were repeated up to ten times. After the last layer was added, gelled and condensed, the tubes were removed from the enclosure and heated in a high-temperature oven for about 1 hr at 200°C, then the temperature was slowly raised to 1000°C at the rate of about 1°C/min.

After 1 hr at 1000°C the composite lamina had sintered to a transparent glass and the preform was allowed to cool.

The preform thus obtained was melt-drawn in a conventional apparatus at 1900°C to give an optical fiber of 140 microns diameter and with a core of 10 microns. The fiber had a graded refractive index in conformity with the invention. Similar results were obtained with solution (B). After sintering, the glass obtained from basic composition (A) contained 91.06% $SiO_2$ and 8.94% $GeO_2$ by weight. The glass from composition (B) had 69.8% $SiO_2$ and 21.35% $GeO_2$. If, in the present Example, successive layers were built up using solution (A) without progressive addition of dopants (i.e. not changing the composition from layer to layer), a glass preform is obtained the refractive index of the cladding thereof is radially constant. A step index fiber is thus provided on a core made of denser a medium.

### Example 2

A hydrolytically gelled silica tube web was manufactured as follows with reference to appended Figs. 2a, 2b and 2c.

A tube 21 (see Fig. 2a) made of glass or of low surface adhesiveness resin (e.g. Teflon) with a threaded opening was selected and provided with an inner tube 23 of a same or like material, a rim seal 24 and a bored screw-cap 25 through which the end of tube 23 was protruding. While leaving aside the seal and the cap, the tube 23 was pushed right down to the bottom of tube 21 to ensure provisional rough tightness and the outer space around said tube 23 was filled with a composition containing (v/v%) Si(OEt)$_4$ 19.27; EtOH 43.33; MeOH 4.0; AcAc 0.06; H$_2$O 33.33; then the seal 24 and the cap 25 were installed and the assembly was upturned as shown on Fig. 2b while slightly pulling off the inside tube 23 to allow the air to penetrate the vacant space 26 provided in the bottom of tube 21 by the downward displacement of the liquid. The tube was left several hours in a humid atmosphere at 60—80°C whereby gelling occurred and the tube could be put again in a straight position, the cap and the seal could be removed and the inside tube be gently pulled away, thus leaving a jacket 27 of gelled silicate. Then a mesh cap 28 was placed over the opening of the tube 21 and the latter was thermally treated to further dry and finally sinter the annular jacket 27. Such treatment involved heating under air flow at the rate of 0.1°C/min to 1000°C where sintering to a clear silica tube occurred.

This tube was used as a web (with others) for making optical preforms according to the procedure of Example 1.

It should be further noted that in using a tubular web in the method of the invention, the latter can be coated with successive metal alkoxide gels on its outside surface as well as on its inside surface or on both. For instance a non-removable tubular web of intermediate refractive index can be coated, on the inside, with layers of solutions leading to progressively increasing indices and, on the outside, with layers of solutions leading to progressively decreasing indices. Such an embodiment further demonstrates the versatility of the method relative to the prior-art.

**Claims**

1. A method for the manufacture of a glass preform suitable for the melt drawing of optical fibers including coating a substrate defined as the lateral surface of an elongated generally cylindrically shaped web (4) of circular or elliptical cross-section with a plurality of superimposed layers of solutions of metal alkoxides, each successive layer being hydrolytically cured to a stiff gel before applying the subsequent layer until a cylindrically shaped laminated composite is obtained, then removing or not removing the web, and further condensing, drying, finally heat sintering and optionally collapsing the resulting structure to a glass preform, the composition of the metal alkoxide solutions corresponding to each successive layer of the coating being suitably varied from one to the next to cause the refractive index of the glass in said preform to radially vary according to a predetermined pattern, characterized in effecting said cure to a stiff gel under controlled conditions whereby evaporation of the solvents is limited by providing a temperature and moisture controlled atmosphere at 5—100°C and 10—80% relative humidity.

2. The method of claim 1, wherein the web (4) is a rod made of a plain, voidless solid glass or glass precursor material.

3. The method of claim 1, wherein the web is a tube (4) and that said lateral surface is the inside and/or the outside surface of this tube.

4. The method of claim 3, wherein the tube (4) is a plastic or metal tube.

5. The method of claim 3, wherein the tube (4) is a mineral glass tube or a silica tube made from a hydrolytically gel-cured solution of metal alkoxides.

6. The method of claim 4, wherein the web (4) is removed mechanically or by dissolving in a suitable acid or solvent liquid.

7. The method of claim 4, wherein the web (4) is removed by heating to a temperature at which physical separation between the web and the gelled composite occurs due to the differences in the heat expansion coefficients.

8. The method of claim 1, wherein said coating is achieved by contacting the substrate (4) to be coated with a supply of said alkoxide solution, then removing said supply and allowing said substrate to drain until a solution layer of substantially even thickness is obtained on said substrate.

9. The method of claim 8, wherein said contacting is effected by dipping the substrate (4) into said solution, then slowly withdrawing therefrom.

10. The method of claims 3 and 8, wherein said substrate is defined as the inside surface of a tube (4), said contacting is effected by filling said tube with said solution and said removing is effected by emptying the tube by gravity according to a predetermined rate.

11. The method of claim 10, wherein said atmosphere of controlled humidity and temperature is introduced into the tube (4) simultaneously with said removing of the said solution.

12. The method of claim 11, wherein said solution consists of silicon ethoxide, germanium ethoxide, ethanol and methanol.

13. The method of claim 12, wherein said solution further comprises water, the metal alkoxides of said solution being in a partially hydrolyzed state with increased viscosity due to the presence of said water.

14. The method of claim 12, wherein said variation of the composition of said solution from one layer to the next one consists in increasing the germanium ethoxide concentration therein by 1 to 3% by weight relative to the concentration of said germanium in the solution for the previous layer.

## Patentansprüche

1. Verfahren zum Herstellen von Glasvorformen für die Verwendung zum Schmelzziehen von optischen Fasern, umfassend das Beschichten eines Substrats, das als die Seitenfläche eines länglichen, im allgemeinen zylindrisch geformten Trägers (4) runden oder elliptischen Querschnitts definiert ist, mit einer Vielzahl überlagerter Schichten aus Metallalkoxid-Lösungen, wobei jede der aufeinanderfolgenden Schichten hydrolytisch zu einem starren Gel ausgehärtet wird, bevor die nachfolgende Schicht aufgebracht wird, bis eine zylindrisch geformte laminierte Zusammensetzung erhalten wird, das Entfernen oder Nichtentfernen des Trägers und weiter das Kondensieren, Trocknen, schließlich Wärmesintern und wahlweise Zusammenfallen der resultierenden Struktur in eine Glasvorform, wobei das Gemisch der Metallalkoxid-Lösungen entsprechend jeder aufeinanderfolgenden Schicht der Beschichtung in geeigneter Weise gegenüber der anderen verändert wird, um den Brechungsindex des Glases in der Vorform zu veranlassen, sich radial entsprechend einem vorbestimmten Muster zu verändern, dadurch gekennzeichnet, daß die Aushärtung zu einem starren Gel unter kontrollierten Bedingungen durchgeführt wird, wobei Verdampfung der Lösungsmittel durch Vorsehen einer temperatur- und feuchtigkeitskontrollierten Atmosphäre mit 5 bis 100°C und 10 bis 18% relativer Feuchtigkeit begrenzt ist.

2. Verfahren nach Anspruch 1, dadurch gekennzeichnet, daß der Träger (4) ein Stab aus einem glatten, porenlosen Vollglas oder aus Glas-Vorläufer-Material ist.

3. Verfahren nach Anspruch 1, dadurch gekennzeichnet, daß der Träger ein Rohr (4) ist und daß die Seitenfläche die Innen- und/oder die Außenfläche dieses Rohrs ist.

4. Verfahren nach Anspruch 3, dadurch gekennzeichnet, daß das Rohr (4) ein Kunststoff- oder ein Metallrohr ist.

5. Verfahren nach Anspruch 3, dadurch gekennzeichnet, daß das Rohr (4) ein Rohr aus Mineralglas oder ein Quarzrohr aus einer hydrolytisch gel-gehärteten Lösung von Metallalkoxiden ist.

6. Verfahren nach Anspruch 4, dadurch gekennzeichnet, daß der Träger (4) mechanisch oder durch Auflösen in einer geeigneten Säure- oder Lösungsmittelflüssigkeit entfernt wird.

7. Verfahren nach Anspruch 4, dadurch gekennzeichnet, daß der Träger (4) durch Erhitzen auf eine Temperatur entfernt wird, bei der körperliche Trennung zwischen dem Träger und dem gelierten Bestandteil aufgrund der Unterschiede in den Wärmeausdehnungs-Koeffizienten erfolgt.

8. Verfahren nach Anspruch 1, dadurch gekennzeichnet, daß die Beschichtung erreicht wird, indem das zu beschichtende Substrat (4) mit einem Zulauf der Alkoxidlösung in Berührung gebracht, dieser Zulauf dann entfernt und dem Substrat ermöglicht wird zu drainieren, bis eine Lösungsschicht von im wesentlichen gleichmäßiger Dicke auf dem Substrat erhalten ist.

9. Verfahren nach Anspruch 8, dadurch gekennzeichnet, daß dieses In-Berührung-Bringen durch Eintauchen des Substrats (4) in die Lösung und langsames Herausziehen aus derselben bewirkt wird.

10. Verfahren nach den Ansprüchen 3 und 8, dadurch gekennzeichnet, daß das Substrat als die Innenseite eines Rohrs (4) definiert ist, wobei das In-Berührung-Bringen durch Füllen des Rohrs mit der Lösung und das Entfernen durch Leeren des Rohrs mittels Schwerkraft entsprechend einer vorbestimmten Geschwindigkeit ausgeführt wird.

11. Verfahren nach Anspruch 10, dadurch gekennzeichnet, daß die atmosphäre kontrollierter Feuchtigkeit und Temperatur in das Rohr (4) gleichzeitig mit dem Entfernen der Lösung eingeführt wird.

12. Verfahren nach Anspruch 11, dadurch gekennzeichnet, daß die Lösung aus Silizium-Äthoxid, Germanium-Äthoxid, Äthanol und Methanol besteht.

13. Verfahren nach Anspruch 12, dadurch gekennzeichnet, daß die Lösung außerdem Wasser enthält, wobei die Metallalkoxide der Lösung aufgrund des Vorhandenseins des Wassers in einem teilweise hydrolisierten Zustand mit erhöhter Viskosität sind.

14. Verfahren nach Anspruch 12, dadurch gekennzeichnet, daß die Veränderung der Zusammensetzung dieser Lösung von einer Schicht zur nächsten darin besteht, die Germanium-Äthoxid-Konzentration darin von 1 auf 3 Gew% in bezug auf die Konzentration des Germaniums in der Lösung für die vorhergehende Schicht zu erhöhen.

## Revendications

1. Procédé pour la fabrication de préforme de verre convenant à l'étirage à chaud de fibres optiques, procédé comprenant un revêtement d'un substrat défini en tant que la surface latérale d'une âme 14 de forme généralement allongée et cylindrique et de section droite circulaire ou elliptique par une pluralité de couches superposées de solutions d'alcoxydes métalliques, chaque couche successive étant traitée hydrolytiquement jusqu'à formation d'un gel de consistance ferme ayant d'appliquer la couche suivante, jusqu'à ce qu'on obtienne un composite stratifié cylindrique, puis élimination ou non élimination de l'âme, et condensation ultérieure, séchage et finalement densification par la chaleur et, facultativement, coalescence de la structure résultante en une préforme de verre, la composition des solutions d'alcoxyde métallique correspondant à chaque couche successive du revêtement variant de manière appropriée de l'une à la suivante pour que l'indice de réfraction du verre dans ladite préforme varie radialement selon un profile prédéterminé, caractérisé en ce qu'on effectue ladite transformation en un gel de consistance ferme sous des conditions contrôlées dans lesquelles l'évaporation des solvants est limitée en entourant l'âme d'une atmosphère dont la température et l'humidité sont contrôlées de 5 à 100°C et de 10 à 80% d'humidité relative, respectivement.

2. Procédé suivant la revendication 1, dans lequel l'âme (4) est un barreau en verre plein, sans creux, ou en un matériau précurseur de verre.

3. Procédé suivant la revendication 1, dans lequel l'âme (4) est un tube et dans lequel ladite surface latérale est constituée par la surface interne et/ou externe de ce tube.

4. Procédé suivant la revendication 3, dans lequel le tube (4) est un tube de plastique ou de métal.

5. Procédé suivant la revendication 3, dans lequel le tube (4) est un tube de verre minéral ou un tube de silice obtenu à partir d'une solution d'alcoxydes métalliques qu'on a transformée hydrolytiquement en gel.

6. Procédé suivant la revendication 4, dans lequel on élimine l'âme (4) par des moyens mécaniques ou en la dissolvant dans un acide convenable ou un liquide dissolvant.

7. Procédé suivant la revendication 4, dans lequel on élimine l'âme (4) par chauffage à une température à laquelle se produit une séparation physique entre l'âme et le composite gélifié, en raison des différences de coefficients thermiques d'expansion de ceux-ci.

8. Procédé suivant la revendication 1, dans lequel on réalise ledit revêtement en mettant en contact le substrat (4) à revêtir avec une réserve de ladite solution d'alcoxyde, puis en retirant ladite réserve et en laissant ledit substrat s'essorer jusqu'à ce qu'on obtienne sur le substrat une couche de solution dont l'épaisseur est sensiblement régulière.

9. Procédé suivant la revendication 8, dans lequel on effectue ladite mise en contact en trempant le substrat (4) dans ladite solution, et en l'en retirant lentement.

10. Procédé suivant les revendications 3 et 8, dans lequel ledit substrat correspond à la surface interne d'un tube (4), ladite mise en contact est effectuée en remplissant ledit tube avec ladite solution et ladite séparation est effectuée par vidange du tube par gravité à une vitesse prédéterminée.

11. Procédé suivant la revendication 10, dans lequel on introduit dans le tube (4) ladite atmosphère à humidité et température contrôlées en même temps qu'on retire ladite solution de ce tube.

12. Procédé suivant la revendication 11, dans lequel ladite solution consiste en éthoxyde de silicium, éthoxyde de germanium, éthanol et méthanol.

13. Procédé suivant la revendication 12, dans lequel ladite solution comprend, en plus, de l'eau, les alcoxydes métalliques de ladite solution étant dans un état partiellement hydrolysés et provoquant une augmentation de viscosité due à la présence de cette eau.

14. Procédé suivant la revendication 12, dans lequel ladite variation de composition de ladite solution lors du passage d'une couche à la couche suivant résulte de l'augmentation de la concentration d'éthoxyde de germanium de 1 à 3% en poids, relativement à la concentration dudit germanium dans la solution de la couche précédente.

FIG. 1

FIG. 2a

FIG. 2b

FIG. 2c